# EUROPÄISCHE PATENTSCHRIFT

(11) **EP 3 492 204 B1**
(45) Veröffentlichungstag und Bekanntmachung des Hinweises auf die Patenterteilung: **25.03.2020**
(21) Anmeldenummer: 17204923.1
(22) Anmeldetag: 01.12.2017
(51) Int. Cl.: B23B 51/00, B23C 5/10

(54) **VERFAHREN ZUM HERSTELLEN EINES SPANENDEN SCHNEIDWERKZEUGS**
METHOD FOR PRODUCING A CUTTING TOOL
PROCÉDÉ DE FABRICATION D'UN OUTIL DE COUPE

(43) Veröffentlichungstag der Anmeldung: 05.06.2019
(73) Patentinhaber: Fraisa SA, 4512 Bellach (CH)
(72) Erfinder: Maushart, Josef, 4500 Solothurn (CH); Brunner-von Zeppelin, Bettina, 4528 Zuchwil (CH); Rechberger, Johann, 3068 Utzigen (CH)
(74) Vertreter: Keller & Partner Patentanwälte AG

(56) Entgegenhaltungen:
- EP-A1- 2 868 413
- CH-A1- 705 029
- DE-A1- 4 009 994
- US-A1- 2003 118 412

## Beschreibung

### Technisches Gebiet

Die Erfindung betrifft ein Verfahren zur Herstellung eines spanenden Schneidwerkzeugs, welches ein Vollfräser ist und ein zumindest teilweise mit einer Beschichtung beschichtetes Substrat aus Hartmetall oder Cermet umfasst, wobei das Schneidwerkzeug wenigstens eine Spanfläche und wenigstens eine Freifläche, zwischen welchen wenigstens eine Schneidkante angeordnet ist, aufweist, wobei zumindest ein Abschnitt der wenigstens einen Schneidkante durch die Beschichtung gebildet ist und damit einen beschichteten Schneidkantenabschnitt bildet.

### Stand der Technik

Spanende Schneidwerkzeuge, welche zum eingangs genannten technischen Gebiet gehören, sind bekannt. Die US 2003/0118412 A1 der Sumimoto Electric Industries beispielsweise beschreibt einen Plattenfräser mit einer Schneidlänge von 6 mm und einem Durchmesser von 0.8 mm sowie einen Bohrer mit einem Durchmesser von 0.2 mm. Beide weisen ein Substrat aus Wolframcarbid auf, welches mittels Bogenentladungsverfahren beschichtet ist. Dabei ist die Beschichtung 0.06 µm bis 3.0 µm dick und weist eines oder mehrere Elemente der Gruppe Titan, Chrom, Vanadium und Silizium sowie eines oder mehrere Elemente der Gruppe Kohlenstoff und Stickstoff auf. Diese Schneidwerkzeuge weisen je Spanflächen und Freiflächen auf, zwischen welchen Schneidkanten angeordnet sind. Dabei sind zumindest Abschnitte der Schneidkanten durch die Beschichtung gebildet und bilden damit beschichtete Schneidkantenabschnitte.

Als weiteres Beispiel beschreibt die EP 2 868 413 A1 der Union Tool Co. einen Kugelschaftfräser mit einem Durchmesser von 1 mm. Dieser Kugelschaftfräser weist einen Werkzeugkörper auf, welcher mit einer harten Schicht beschichtet ist. In einem Bereich in axialer Richtung des Schneidwerkzeugs von der Spitze bis zu 0.3 mal oder weniger mal dem Werkzeugdurchmesser ist die Dicke der harten Schicht auf der Freifläche von 8 µm bis 30 µm dick und mindestens doppelt so dick wie die Dicke der harten Schicht auf der Spanfläche. Solche bekannte spanende Schneidwerkzeuge haben den Nachteil, dass sie nur eine sehr beschränkte Standzeit haben. Der Grund dafür ist, dass die Beschichtung schon nach kurzer Benutzungsdauer abgenutzt ist und damit die beschichteten Schneidkantenabschnitte abgetragen sind. Dies führt dazu, dass das Schneidwerkzeug seine spanende Wirkung verliert, weil das übrigbleibende Substrat die spanende Wirkung übernehmen muss und weil das Substratmaterial weicher als die Beschichtung ist.

### Darstellung der Erfindung

Aufgabe der Erfindung ist es, ein dem eingangs genannten technischen Gebiet zugehörendes spanendes Schneidwerkzeug zu schaffen, welches bzw. welcher eine längere Standzeit aufweist.

Die Lösung der Aufgabe ist durch die Merkmale des Anspruchs 1 durch ein Verfahren zur Herstellung eines solchen spanenden Schneidwerkzeugs definiert. Gemäss der Erfindung ist zumindest innerhalb eines Abschnittbereichs des beschichteten Schneidkantenabschnitts an jedem Punkt des beschichteten Schneidkantenabschnitts ein Quotient aus einem Radius des beschichteten Schneidkantenabschnitts am jeweiligen Punkt geteilt durch eine lokale Dicke der Beschichtung kleiner als 0.9. Gemäss der Erfindung wird das Substrat mit der Beschichtung beschichtet, damit zumindest innerhalb eines Abschnittbereichs des beschichteten Schneidkantenabschnitts an jedem Punkt des beschichteten Schneidkantenabschnitts der Quotient aus dem Radius des beschichteten Schneidkantenabschnitts am jeweiligen Punkt geteilt durch die lokale Dicke der Beschichtung kleiner als 0.9 ist, wobei das Schneidwerkzeug ein Schneidteil mit einem Durchmesser aufweist und die Beschichtung wird mit einer mittleren Dicke aufgetragen wird, dass der Durchmesser des Schneidteils um einen Faktor von höchstens 600, bevorzugt höchstens 300, besonders bevorzugt höchstens 100 grösser als die mittlere Dicke der Beschichtung ist, wobei die mittlere Dicke ein Mittelwert der Dicke der Beschichtung in einem über den gesamten Abschnittbereich des beschichteten Schneidkantenabschnitts an den Abschnittbereich anliegenden Bereich der an den Abschnittbereich anliegenden wenigstens einen Freifläche ist, wodurch nach der Auftragung der Beschichtung ein Teil der Beschichtung der Schneidkante absplittert und dadurch eine neue Schneidkante bildet, wobei eine Bruchstelle, an welcher der Teil der Beschichtung abgesplittert ist, eine neue Spanfläche bildet, wodurch innerhalb des Abschnittbereichs des beschichteten Schneidkantenabschnitts an jedem Punkt des beschichteten Schneidkantenabschnitts der Quotient aus dem Radius des beschichteten Schneidkantenabschnitts am jeweiligen Punkt geteilt durch die lokale Dicke der Beschichtung kleiner als 0.9 ist, wobei sich der Abschnittbereich des beschichteten Schneidkantenabschnitts über mindestens 80% des beschichteten Schneidkantenabschnitts erstreckt.

Das spanende Schneidwerkzeug ist ein Vollfräser. Ein Vollfräser ist ein Fräswerkzeug, das einen Werkzeugkörper aufweist, an welchem die spanabhebenden Schneidkanten direkt angeordnet sind. Das heisst, dass der Werkzeugkörper die spanabhebenden Schneidkanten selbst trägt. In einer nicht erfindungsgemässen Ausführungsform kann das spanende Schneidwerkzeug anstelle von einem Vollfräser aber auch ein Trägerwerkzeug sein. Ein Trägerwerkzeug weist einen Werkzeugkörper mit Aufnahmen für Wendeschneidplatten auf. In diesen Aufnahmen können Wendeschneidplatten angebracht werden, wobei die spanabhebenden Schneidkanten direkt an den Wendeschneidplatten angeordnet sind. Das heisst, dass die Wendeschneidplatten die Schneidkanten selbst tragen. Entsprechend sind in diesem Fall die Schneidkanten nur indirekt am Werkzeugkörper angeordnet, weil die Schneidkanten an den Wendeschneidplatten angeordnet sind, welche in den Aufnahmen am Werkzeugkörper angebracht sind.

Gemäss der Erfindung umfasst das spanende Schneidwerkzeug ein Substrat, welches zumindest teilweise mit einer Beschichtung beschichtet ist. Diese Beschichtung umfasst mindestens eine Schicht. Sie kann somit genau eine Schicht oder aber auch zwei oder mehr Schichten umfassen. Das Substrat kann zudem mit einer oder mehreren weiteren Schichten beschichtet sein, welche nicht zur Beschichtung gehören und welche das Substrat zumindest teilweise bedecken. Diese eine oder mehrere weiteren Schichten können mit der Beschichtung bereichsweise überlappend oder auch überlappungsfrei zur Beschichtung auf dem Substrat angeordnet sein.

Wie bereits erwähnt, weist das Schneidwerkzeug wenigstens eine Spanfläche und wenigstens eine Freifläche auf, zwischen welchen wenigstens eine Schneidkante angeordnet ist. Damit kann das Schneidwerkzeug eine oder auch mehr als eine Schneidkante aufweisen. Wenn das Schneidwerkzeug mehr als eine Schneidkante aufweist, können zwei oder mehr Schneidkanten voneinander räumlich getrennt zwischen der gleichen Spanfläche und der gleichen Freifläche angeordnet sein. Es besteht aber auch die Möglichkeit, dass zwei oder mehr Schneidkanten jeweils zwischen verschiedenen Spanflächen und der gleichen Freifläche, zwischen der gleichen Spanfläche und verschiedenen Freiflächen, oder jeweils zwischen verschiedenen Spanflächen und verschiedenen Freiflächen des Schneidwerkzeugs angeordnet sind. Entsprechend kann das Schneidwerkzeug genau eine Spanfläche und genau eine Freifläche sowie eine oder mehrere Schneidkanten umfassen. Genauso kann das Schneidwerkzeug aber auch mehr als eine Schneidkante und dabei genau eine Spanfläche und mehr als eine Freifläche, mehr als eine Spanfläche und genau eine Freifläche, oder aber mehr als eine Spanfläche und mehr als eine Freifläche umfassen. Aus diesem Grund liegt beim spanenden Schneidwerkzeug vorzugsweise bei jeder der wenigstens einen Schneidkante an jedem Punkt der jeweiligen Schneidkante eine der wenigstens einen Spanfläche auf einer ersten Seite der jeweiligen Schneidkante und eine der wenigstens einen Freifläche auf einer der ersten Seite der jeweiligen Schneidkante gegenüberliegenden zweiten Seite der jeweiligen Schneidkante am jeweiligen Punkt direkt an die jeweilige Schneidkante an.

Bei korrekter Verwendung des Schneidwerkzeugs weist jeder Punkt von jeder der wenigstens einen Schneidkante eine Vorschubrichtung auf. Dabei ist die an der jeweiligen Schneidkante am jeweiligen Punkt anliegende Spanfläche im Wesentlichen in Vorschubrichtung des jeweiligen Punkts ausgerichtet, während die an dieser Schneidkante an diesem Punkt anliegende Freifläche im Wesentlichen parallel zur Vorschubrichtung dieses Punkts ausgerichtet ist. Bei der spanenden Bearbeitung eines Werkstücks mit dem Schneidwerkzeug läuft ein Span, welcher mit dem Schneidwerkzeug aus dem Werkstück gehoben wird, entlang der jeweiligen Spanfläche ab.

Gemäss der Erfindung ist zumindest ein Abschnitt der wenigstens einen Schneidkante durch die Beschichtung gebildet. Dieser Abschnitt kann ein zusammenhängender Abschnitt sein oder auch durch mehrere separate Teilabschnitte gebildet sein, welche auf einer gleichen Schneidkante oder auf mehr als einer Schneidkante angeordnet sind. Unabhängig davon bildet dieser Abschnitt einen beschichteten Schneidkantenabschnitt.

Gemäss der Erfindung ist ausserdem zumindest innerhalb eines Abschnittbereichs des beschichteten Schneidkantenabschnitts an jedem Punkt des beschichteten Schneidkantenabschnitts ein Quotient aus einem Radius des beschichteten Schneidkantenabschnitts am jeweiligen Punkt geteilt durch eine lokale Dicke der Beschichtung kleiner als 0.9. Dabei kann der Abschnittbereich ein zusammenhängender Bereich sein oder auch durch mehrere separate Teilbereiche gebildet sein. Falls der Abschnittbereich durch mehrere separate Teilbereiche gebildet ist und falls der beschichtete Schneidkantenabschnitt aus mehreren separaten Teilabschnitten gebildet ist, so können die Teilbereiche des Abschnittbereichs auf dem gleichen Teilabschnitt oder auf verschiedenen Teilabschnitten des Schneidkantenabschnitts angeordnet sein.

Für die Bestimmung des Quotienten an einem Punkt des beschichteten Schneidkantenabschnitts wird der Radius des beschichteten Schneidkantenabschnitts an diesem Punkt verwendet. Da dieser Punkt auf dem beschichteten Schneidkantenabschnitt liegt, liegt der Punkt auch auf der wenigstens einen Schneidkante. Dabei ist der Radius der wenigstens einen Schneidkante bzw. des beschichteten Schneidkantenabschnitts am jeweiligen Punkt der Schneidkante bzw. des beschichteten Schneidkantenabschnitts vorzugsweise der Radius eines Kreises, welcher in einer an dem jeweiligen Punkt anliegenden Ebene liegt, wobei die Ebene senkrecht zu einer an den Punkt an der Schneidkante bzw. an den beschichteten Schneidkantenabschnitt anliegenden und entlang der Schneidkante bzw. dem beschichteten Schneidkantenabschnitt ausgerichteten Tangente ausgerichtet ist. Vorzugsweise ist dabei ein Abstand einer in der Ebene verlaufenden Linie, welche aus einem Kreisabschnitt des Kreises, einem ersten Endbereich und einem zweiten Endbereich besteht, von einer Oberfläche des Schneidwerkzeugs minimal, wobei die Linie vorzugsweise stetig differenzierbar ist und an einem ersten Ende des Kreisabschnitts als erster Endbereich ein erster Längenabschnitt einer an den Kreis anliegenden ersten Tangente aufweist, welche parallel zur dortigen Freifläche ausgerichtet ist, und an einem zweiten Ende des Kreisabschnitts als zweiter Endbereich ein zweiter Längenabschnitt einer an den Kreis anliegenden zweiten Tangente umfasst, welche parallel zur dortigen Spanfläche ausgerichtet ist, wobei der erste und der zweite Längenabschnitt bzw. Endbereich je 5 µm, bevorzugt 10 µm lang sind. Somit sind der Radius und die Position des Kreises vorzugsweise dadurch bestimmt, dass der Abstand der in der Ebene verlaufenden Linie von der Oberfläche des Schneidwerkzeugs minimal ist. Das bedeutet, dass für jeden Punkt der Linie der Abstand der Linie von der Oberfläche des Schneidwerkzeugs betrachtet wird und dass die Summe bzw. das Integral der Abstände aller Punkte der Linie von der Oberfläche des Schneidwerkzeugs minimal ist, wenn die Linie korrekt positioniert ist und der Radius des Kreises der Radius des beschichteten Schneidkantenabschnitts am entsprechenden Punkt ist.

Für die Bestimmung des Quotienten an einem Punkt des beschichteten Schneidkantenabschnitts wird gemäss der Erfindung weiter die lokale Dicke der Beschichtung verwendet. Vorzugsweise handelt es sich bei der lokalen Dicke der Beschichtung an einem Punkt des beschichteten Schneidkantenabschnitts um die kleinste Distanz dieses Punktes vom Substrat. Dabei wird davon ausgegangen, dass sich der Punkt auf einer Oberfläche des Schneidwerkzeugs befindet, weil es sich um einen Punkt des beschichteten Schneidkantenabschnitts und damit um einen Punkt auf einer der wenigstens einen Schneidkante handelt.

Die erfindungsgemässe Lösung hat den Effekt, dass der Radius des beschichteten Schneidkantenabschnitts an den Punkten innerhalb des Abschnittbereichs des beschichteten Schneidkantenabschnitts jeweils im Vergleich zur lokalen Dicke der Beschichtung klein ist. Dadurch ist ein Bereich der Spanfläche, welcher an diesen Punkten an die Schneidkante anliegt, durch einen Beschichtungsquerschnitt gebildet. Entsprechend kann in diesem Bereich der Spanfläche in eine Richtung entgegen der Vorschubrichtung des Schneidwerkzeugs mehr Material der Beschichtung abgetragen werden, bis das Schneidwerkzeug seine spanende Wirkung verliert. Dies führt dazu, dass die Standzeit des Schneidwerkzeugs erheblich erhöht wird.

In einer bevorzugten Variante wird das Substrat mittels einem physikalischen Verdampfungsverfahren wie beispielsweise einem Bogenentladungsverfahren mit der Beschichtung beschichtet. In einer weiteren bevorzugten Variante hingegen wird das Substrat mittels einem chemischen Verdampfungsverfahren mit der Beschichtung beschichtet.

Beim spanenden Schneidwerkzeug erstreckt sich der Abschnittbereich des beschichteten Schneidkantenabschnitts über mindestens 80% des beschichteten Schneidkantenabschnitts. Je grösser der Anteil des beschichteten Schneidkantenabschnitts ist, über welchen sich der Abschnittbereich erstreckt, desto grösser ist auch der Anteil der Schneidkante, welche eine erhöhte Standzeit aufweist. Entsprechend kann bei einer Benutzung des spanenden Schneidwerkzeugs ein grösserer Bereich der Schneidkante während einer längeren Zeit benutzt werden. Dieser Vorteil wird stärker, je grösser Anteil des Abschnittbereichs am beschichteten Schneidkantenabschnitt ist. Entsprechend den vorgehend angegebenen mindestens 80% nimmt dieser Vorteil mit zunehmendem Prozentsatz zu. Aus diesem Grund ist auch eine weitere Variante besonders vorteilhaft, in welcher sich der Abschnittbereich des beschichteten Schneidkantenabschnitts über den gesamten beschichteten Schneidkantenabschnitt erstreckt.

Bevorzugt ist der Quotient aus dem Radius der Schneidkante geteilt durch die lokale Dicke der Beschichtung kleiner als 0.6 oder kleiner als 0.3. Je kleiner der Quotient dabei ist, desto kleiner ist der Radius des beschichteten Schneidkantenabschnitts an den Punkten innerhalb des Abschnittbereichs des beschichteten Schneidkantenabschnitts jeweils im Vergleich zur lokalen Dicke der Beschichtung. Entsprechend wird mit abnehmendem Quotienten der Bereich der Spanfläche, welcher an den entsprechenden Punkten an die Schneidkante anliegt und durch den Beschichtungsquerschnitt gebildet ist, grösser. Dadurch wird der Bereich der Spanfläche grösser, innerhalb von welchem in eine Richtung entgegen der Vorschubrichtung des Schneidwerkzeugs mehr Material der Beschichtung abgetragen werden kann, bis das Schneidwerkzeug seine spanende Wirkung verliert. Zudem wird die Schneidkante mit abnehmendem Quotienten schärfer und weist entsprechend mit abnehmendem Quotienten bessere Spaneigenschaften sowie eine erhöhte Standzeit auf. Falls bei der Herstellung des Schneidwerkzeugs die Schneidkante nach dem Auftrag der Beschichtung nachbearbeitet wird, um den gewünschten Quotienten von kleiner als 0.9, kleiner als 0.6 bzw. kleiner als 0.3 zu erreichen, so wird die Herstellung des Schneidwerkzeugs jedoch mit abnehmendem Quotienten aufwändiger.

In einer ersten Variante erstreckt sich der Abschnittbereich des beschichteten Schneidkantenabschnitts über mindestens 80% des beschichteten Schneidkantenabschnitts und der Quotient ist kleiner als 0.6. In einer zweiten Variante erstreckt sich der Abschnittbereich des beschichteten Schneidkantenabschnitts über mindestens 80% des beschichteten Schneidkantenabschnitts und der Quotient ist kleiner als 0.3. In einer dritten Variante erstreckt sich der Abschnittbereich des beschichteten Schneidkantenabschnitts über den gesamten beschichteten Schneidkantenabschnitt und der Quotient ist kleiner als 0.6. In einer vierten Variante erstreckt sich der Abschnittbereich des beschichteten Schneidkantenabschnitts über den gesamten beschichteten Schneidkantenabschnitt und der Quotient ist kleiner als 0.3.

Alternativ zu diesen Varianten besteht aber auch wie bereits vorgehend erwähnt die Möglichkeit, dass der Quotient kleiner als 0.9 ist. Solange der Quotient dabei kleiner als 0.9 ist, ist unerheblich, ob der Quotient kleiner, gleich oder grösser als 0.6 oder kleiner, gleich, oder grösser als 0.3 ist.

Unabhängig von den vorhergehend genannten Varianten ist bevorzugt die gesamte wenigstens eine Schneidkante durch die Beschichtung gebildet, womit sich der beschichtete Schneidkantenabschnitt über die gesamte wenigstens eine Schneidkante erstreckt. Dies hat den Vorteil, dass im Vergleich zu einer Variante, wo nicht die gesamte wenigstens eine Schneidkante durch die Beschichtung gebildet ist, aufgrund der Beschichtung die gesamten Schneidkanten eine erhöhte Standzeit aufweisen. Diese Standzeit ist weiter erhöht, je grösser der Prozentsatz des Abschnittbereichs des beschichteten Schneidkantenabschnitts ist, welcher sich über den beschichteten Schneidkantenabschnitt erstreckt. Wenn die gesamte wenigstens eine Schneidkante durch die Beschichtung gebildet ist, so hat dies je nach Geometrie des Schneidwerkzeugs zudem den Vorteil, dass die Herstellung des Schneidwerkzeugs vereinfacht ist, wenn die gesamte wenigstens eine Schneidkante beschichtet werden kann.

Alternativ dazu besteht aber auch die Möglichkeit, dass nur ein Teil der wenigstens einen Schneidkante durch die Beschichtung gebildet ist. Eine solche Alternative hat den Vorteil, dass je nach Geometrie des Schneidwerkzeugs die Herstellung des Schneidwerkzeugs vereinfacht wird.

In einer ersten bevorzugten Variante umfasst die Beschichtung eine einzige Schicht. Dies hat den Vorteil, dass das Schneidwerkzeug einfach hergestellt werden kann.

In einer zweiten bevorzugten Variante hingegen umfasst die Beschichtung zwei oder mehr Schichten. Vorzugsweise überlappen sich dabei die zwei oder mehr Schichten der Beschichtung zumindest teilweise. Dies hat den Vorteil, dass in den überlappenden Bereichen der Schichten der Beschichtung durch den Schichtaufbau die Standzeit des Schneidwerkzeugs erhöht werden kann. Sofern sich die zwei oder mehr Schichten nicht gänzlich überlappen, bestehen dabei Bereiche, in welchen die zwei oder mehr Schichten überlappungsfrei auf dem Substrat angeordnet sind. In solchen Bereichen wird der Vorteil erreicht, dass die dort vorhandene Schicht der Beschichtung an die lokal benötigten Eigenschaften angepasst werden kann. Dabei kann es sich beispielsweise um eine erhöhte Härte, eine erhöhte Haftung auf dem Substrat oder um eine erhöhte Temperaturbeständigkeit handeln. Dieser Vorteil wird auch erreicht, wenn die Beschichtung zwei oder mehr Schichten umfasst, welche überlappungsfrei auf dem Substrat angeordnet sind.

Vorteilhafterweise ist im gesamten Abschnittbereich des beschichteten Schneidkantenabschnitts die Beschichtung direkt auf dem Substrat aufgebracht. Das bedeutet, dass im gesamten Abschnittbereich des beschichteten Schneidkantenabschnitts keine Zwischenschicht zwischen der Beschichtung und dem Substrat vorhanden ist. Dabei ist unerheblich, ob vor der Auftragung der Beschichtung innerhalb des Substrats eine Schicht im Bereich einer Oberfläche des Substrats vorbehandelt wird oder nicht. Eine solche Vorbehandlung kann beispielsweise erfolgen, wenn das Substrat aus Wolframkarbid besteht und entsprechend Wolframkarbidkörner aufweist, welche durch einen Binder aus Kobalt zusammengehalten sind. In diesem Fall besteht beispielsweise die Möglichkeit, dass vor der Auftragung der Beschichtung im Bereich der Oberfläche des Substrats der Gehalt des Kobalts durch eine chemische Behandlung und/oder durch eine Behandlung mit einem Laserstrahl reduziert wird, um die Haftung der Beschichtung auf dem Substrat zu erhöhen.

Unabhängig davon, ob das Substrat im Bereich der Oberfläche vor der Auftragung der Beschichtung vorbehandelt wird oder nicht, hat das Aufbringen der Beschichtung direkt auf dem Substrat ebenfalls den Vorteil, dass die Haftung der Beschichtung auf dem Substrat erhöht werden kann. In einer bevorzugten Variante davon ist im gesamten beschichteten Schneidkantenabschnitt die Beschichtung direkt auf dem Substrat aufgebracht. Das bedeutet, dass im gesamten beschichteten Schneidkantenabschnitt keine Zwischenschicht zwischen der Beschichtung und dem Substrat vorhanden ist. Dies hat den Vorteil, dass das Schneidwerkzeug einfach und entsprechend kostengünstig hergestellt werden kann.

Alternativ dazu besteht aber auch die Möglichkeit, dass die Beschichtung nicht im gesamten Abschnittbereich des beschichteten Schneidkantenabschnitts direkt auf dem Substrat aufgebracht ist.

Vorzugsweise ist innerhalb des Abschnittbereichs des beschichteten Schneidkantenabschnitts an jedem Punkt des beschichteten Schneidkantenabschnitts die lokale Dicke der Beschichtung grösser als 5 µm, bevorzugt grösser als 7 µm, bevorzugt grösser als 10 µm, besonders bevorzugt grösser als 15 µm und ganz besonders bevorzugt grösser als 20 µm. Grundsätzlich wird dabei mit zunehmender lokalen Dicke der Beschichtung die Standzeit der Beschichtung im jeweiligen Bereich erhöht. Dabei ist jedoch zu beachten, dass, je grösser die lokale Dicke der Beschichtung ist, auch die Wahrscheinlichkeit grösser ist, dass die Beschichtung nach der Auftragung der Beschichtung aufgrund von Spannungen teilweise oder ganz absplittert. Dies ist nachteilig, falls dadurch die ganze Beschichtung absplittert, weil ohne Beschichtung die Standzeit des Schneidwerkzeugs reduziert ist. Hingegen ist dies vorteilhaft, wenn dadurch nach der Auftragung der Beschichtung nur ein Teil der Beschichtung im Bereich der Schneidkante absplittert und dadurch eine neue Schneidkante bildet, bei welcher der Quotient aus dem Radius des beschichteten Schneidkantenabschnitts am jeweiligen Punkt geteilt durch die lokale Dicke der Beschichtung kleiner als 0.9, kleiner als 0.6 bzw. kleiner als 0.3 ist. In diesem Fall erübrigt sich aufgrund der Absplitterung eine Nachbearbeitung der Schneidkante, sodass das Schneidwerkzeug einfacher und damit kostengünstiger hergestellt werden kann.

Alternativ dazu besteht aber auch die Möglichkeit, dass die lokale Dicke der Beschichtung gleich oder kleiner als 5 µm ist.

Bevorzugt ist jeder Punkt im Abschnittbereich des beschichteten Schneidkantenabschnitts durch einen Bereich der Beschichtung gebildet, in welchem das unter der Beschichtung liegende Substrat eine Substratkante bildet, wobei auf einer ersten Seite der Substratkante eine Substratspanfläche anliegt und auf einer der ersten Seite der Substratkante gegenüberliegenden Seite der Substratkante eine Substratfreifläche anliegt. Wie bereits erwähnt, weist bei korrekter Verwendung des Schneidwerkzeugs jeder Punkt von jeder der wenigstens einen Schneidkante eine Vorschubrichtung auf. Dies trifft innerhalb des Abschnittbereichs auch auf die Substratkante zu, sofern das unter der Beschichtung liegende Substrat eine Substratkante bildet, wobei auf einer ersten Seite der Substratkante eine Substratspanfläche anliegt und auf einer der ersten Seite der Substratkante gegenüberliegenden Seite der Substratkante eine Substratfreifläche anliegt. Dabei ist die an der jeweiligen Substratkante am jeweiligen Punkt anliegende Substratspanfläche im Wesentlichen in Vorschubrichtung des jeweiligen Punkts ausgerichtet, während die an dieser Substratkante an diesem Punkt anliegende Substratfreifläche im Wesentlichen parallel zur Vorschubrichtung des Punkts ausgerichtet ist.

Wenn das unter der Beschichtung liegende Substrat eine Substratkante bildet, so reicht der Bereich der Beschichtung, durch welchen jeder Punkt im Abschnittbereich des beschichteten Schneidkantenabschnitts gebildet ist und in welchem das unter der Beschichtung liegende Substrat die Substratkante bildet, bevorzugt beidseitig vom Abschnittbereich bis weiter von der Schneidkante weg als eine einem Mittelwert der lokalen Dicke der Beschichtung im Abschnittbereich entsprechende Distanz. Dies hat den Vorteil, dass eine Form des Schneidwerkzeugs durch das Substrat vorgegeben wird und die Beschichtung im Wesentlichen dieser Form folgt. Entsprechend wird dadurch der Herstellungsprozess des Schneidwerkzeugs vereinfacht. Besonders bevorzugt reicht der Bereich 50 µm, ganz besonders bevorzugt bis 25 µm von der Schneidkante weg. Es besteht aber auch die Möglichkeit, dass der Bereich um eine andere Distanz von der Schneidkante weg reicht.

Sofern jeder Punkt im Abschnittbereich des beschichteten Schneidkantenabschnitts durch einen Bereich der Beschichtung gebildet ist, in welchem das unter der Beschichtung liegende Substrat eine Substratkante bildet, wobei auf einer ersten Seite der Substratkante eine Substratspanfläche anliegt und auf einer der ersten Seite der Substratkante gegenüberliegenden Seite der Substratkante eine Substratfreifläche anliegt, so verläuft vorteilhafterweise jeder Punkt im Abschnittbereich des beschichteten Schneidkantenabschnitts über der Substratfreifläche. Das bedeutet, dass durch jeden Punkt im Abschnittbereich des beschichteten Schneidkantenabschnitts eine senkrecht zur Substratfreifläche stehende Normale verläuft. Somit wird die Schneidkante im Gebrauch des Schneidwerkzeugs bevorzugt zumindest innerhalb des Abschnittbereichs des beschichteten Schneidkantenabschnitts an jedem Punkt des beschichteten Schneidkantenabschnitts in eine Vorschubrichtung bewegt, wobei bei der Bewegung der jeweilige Punkt der Schneidkante der nächstliegenden Substratkante nachfolgt. Dies hat den Vorteil, dass die Stabilität der Beschichtung im Bereich des Abschnittbereichs der beschichteten Schneidkante höher ist, als wenn sich an den Punkten des beschichteten Schneidkantenabschnitts innerhalb des Abschnittbereichs die Substratkante bei einer Bewegung in Vorschubrichtung der jeweilige Punkt der Schneidkante der nächstliegenden Substratkante vorausbewegt oder als wenn sich an den Punkten des beschichteten Schneidkantenabschnitts innerhalb des Abschnittbereichs die Substratkante genau über der Substratkante befindet.

Wenn durch jeden Punkt im Abschnittbereich des beschichteten Schneidkantenabschnitts eine senkrecht zur Substratfreifläche stehende Normale verläuft, so ist vorzugsweise eine Länge dieser Normalen von der Substratfreifläche zum jeweiligen Punkt im Abschnittbereich des beschichteten Schneidkantenabschnitts die kürzeste Distanz dieses Punktes vom Substrat und entspricht somit der lokalen Dicke der Beschichtung an diesem Punkt.

Als Variante dazu besteht aber auch die Möglichkeit, dass nicht jeder Punkt im Abschnittbereich des beschichteten Schneidkantenabschnitts über der Substratfreifläche verläuft.

Alternativ zu diesen Varianten besteht auch die Möglichkeit, dass im genannten Bereich der Beschichtung das unter der Beschichtung liegende Substrat keine Substratkante bildet.

Falls jeder Punkt im Abschnittbereich des beschichteten Schneidkantenabschnitts durch einen Bereich der Beschichtung gebildet ist, in welchem das unter der Beschichtung liegende Substrat eine Substratkante bildet, wobei auf einer ersten Seite der Substratkante eine Substratspanfläche anliegt und auf einer der ersten Seite der Substratkante gegenüberliegenden Seite der Substratkante eine Substratfreifläche anliegt, besteht die Möglichkeit, dass die mittlere Dicke der Beschichtung auf der Substratspanfläche gleich wie die mittlere Dicke der Beschichtung auf der Substratfreifläche ist. Dabei ist die mittlere Dicke der Beschichtung auf der Substratspanfläche ein Mittelwert der Dicke der Beschichtung in einem Bereich der Substratspanfläche, welcher sich entlang dem gesamten Abschnittbereich des beschichteten Schneidkantenabschnitts erstreckt und über seine gesamte Länge an die Substratkante anliegt und sich von der Substratkante bis 10 µm von der Substratkante weg erstreckt. Weiter ist dabei die mittlere Dicke der Beschichtung auf der Substratfreifläche ein Mittelwert der Dicke der Beschichtung in einem Bereich der Substratfreifläche, welcher sich entlang dem gesamten Abschnittbereich des beschichteten Schneidkantenabschnitts erstreckt und über seine gesamte Länge an die Substratkante anliegt und sich von der Substratkante bis 10 µm von der Substratkante weg erstreckt.

In einer bevorzugten Variante davon ist die mittlere Dicke der Beschichtung auf der Substratspanfläche hingegen geringer als die mittlere Dicke der Beschichtung auf der Substratfreifläche. Eine solche Variante hat den Vorteil, dass die Spaneigenschaften der des Schneidwerkzeugs verbessert sind.

Das Schneidwerkzeug ist ein Vollfräser mit einem Schneidteil. Das bedeutet, dass das Schneidwerkzeug ein Schneidteil aufweist, an welchem zumindest eine der wenigstens einen Schneidkante direkt angeordnet ist.

Bevorzugt ist das Schneidwerkzeug ein Schaftfräser oder Plattenfräser. Beides sind Vollfräser mit einem Schneidteil. Als Variante dazu besteht aber auch die Möglichkeit, dass das Schneidwerkzeug eine andere Art Vollfräser mit einem Schneidteil ist.

Das Schneidteil weist einen Durchmesser auf, welcher um einen Faktor von höchstens 600, bevorzugt höchstens 300, besonders bevorzugt von höchstens 100 grösser als eine mittlere Dicke der Beschichtung ist, wobei die mittlere Dicke ein Mittelwert der Dicke der Beschichtung in einem über den gesamten Abschnittbereich des beschichteten Schneidkantenabschnitts an den Abschnittbereich anliegenden Bereich der an den Abschnittbereich anliegenden wenigstens einen Freifläche ist. Vorzugsweise erstreckt sich dabei der über den gesamten Abschnittbereich des beschichteten Schneidkantenabschnitts an den Abschnittbereich des beschichteten Schneidkantenabschnitts anliegende Bereich der an den Abschnittbereich anliegenden wenigstens einen Freifläche vom Abschnittbereich bis zu einer Entfernung von 10 µm, vom Abschnittbereich weg. Dabei entspricht der Durchmesser des Schneidteils bevorzugt im Wesentlichen einer Breite einer Frässpur, welche bei Benutzung des Schneidwerkzeugs mit dem Schneidwerkzeig in ein Werkzeug gefräst werden kann.

Unabhängig davon, bis wie weit sich der an den Abschnittbereich des beschichteten Schneidkantenabschnitts anliegende Bereich der an den Abschnittbereich anliegenden wenigstens einen Freifläche vom Abschnittbereich weg erstreckt, hat der genannte Faktor von höchstens 600 bzw. höchstens 300 bzw. höchstens 100 den Vorteil, dass gewährleistet wird, dass nach der Auftragung der Beschichtung ein Teil der Beschichtung im Bereich der Schneidkante absplittert und dadurch eine neue Schneidkante bildet, wobei eine Bruchstelle, an welcher der Teil der Beschichtung abgesplittert ist, eine neue Spanfläche bildet. Somit wird erreicht, dass innerhalb des Abschnittbereichs des beschichteten Schneidkantenabschnitts an jedem Punkt des beschichteten Schneidkantenabschnitts der Quotient aus dem Radius des beschichteten Schneidkantenabschnitts am jeweiligen Punkt geteilt durch die lokale Dicke der Beschichtung kleiner als 0.9, kleiner als 0.6 bzw. kleiner als 0.3 ist. Je kleiner dabei der genannte Faktor ist, desto grösser wird die Wahrscheinlichkeit des Absplitterns. Somit wird, je kleiner der genannte Faktor ist, bei ansonsten gleichbleibenden Beschichtungsparametern der absplitternde Anteil der Beschichtung grösser. Entsprechend wird die Grösse des zu erwartenden Abschnittbereichs des beschichteten Schneidkantenbereichs grösser, je kleiner der Faktor ist. Dies führt dazu, dass durch geeignete Wahl des Faktors die Herstellung des Schneidwerkzeugs vereinfacht wird, indem das teilweise Absplittern der Schneidkante genutzt wird. Dieser Vorteil wird zusätzlich verstärkt, wenn jeder Punkt im Abschnittbereich des beschichteten Schneidkantenabschnitts durch einen Bereich der Beschichtung gebildet ist, in welchem das unter der Beschichtung liegende Substrat eine Substratkante bildet, wobei auf einer ersten Seite der Substratkante eine Substratspanfläche anliegt und auf einer der ersten Seite der Substratkante gegenüberliegenden Seite der Substratkante eine Substratfreifläche anliegt, weil die Wahrscheinlichkeit, dass die Beschichtung im Bereich der Substratkante absplittert, höher ist, als dass die Beschichtung im Bereich einer Fläche des Substrats wie beispielsweise der Substratfreifläche oder der Substratspanfläche absplittert.

Die Erzeugung der Schneidkante aufgrund eines Absplitterns der Beschichtung hat nebst der vereinfachten Herstellung des Schneidwerkzeugs den Vorteil, dass im abgesplitterten Bereich die Spanfläche von einer durch das Absplittern erzeugten Bruchstelle gebildet wird und damit eine geringere Rauigkeit als in nicht abgesplitterten Bereichen aufweist. Aufgrund der geringeren Rauigkeit gleitet bei spanender Verwendung des Schneidwerkzeugs ein Span reibungsärmer und damit leichter über die Spanfläche ab. Entsprechend wird dadurch das Schneidwerkzeug weniger stark abgenutzt, womit die Standzeit des Schneidwerkzeugs weiter erhöht wird.

Vorteilhafterweise weist der Schneidteil einen Durchmesser von 3mm oder weniger, 2 mm oder weniger, oder 1 mm oder weniger auf. Somit handelt es sich beim Schneidwerkzeug bevorzugt um einen Mikrofräser. Dies hat den Vorteil, dass der vorgenannte Faktor von höchstens 600, bevorzugt höchstens 300, besonders bevorzugt höchstens 100 einfach erreicht werden kann, indem die Beschichtung eine mittlere Dicke im Bereich von einigen µm bis einigen zehn µm aufweist. Insbesondere wird damit erreicht, dass die lokale Dicke der Beschichtung grösser als 5 µm, grösser als 7 µm grösser als 10 µm, grösser als 15 µm bzw. grösser als 20 µm gewählt werden kann. Wie bereits erwähnt gilt für diese Zahlenwerte der lokalen Dicke grundsätzlich, dass mit zunehmender lokalen Dicke der Beschichtung die Standzeit der Beschichtung im jeweiligen Bereich erhöht wird.

Alternativ zu einem Durchmesser von 3 mm oder weniger, 2 mm oder weniger, oder 1 mm oder weniger des Schneidteils besteht aber auch die Möglichkeit, dass der Schneidteil einen Durchmesser von mehr als 3 mm aufweist.

Vorteilhafterweise weist die Beschichtung einen Gewichtsanteil an Kohlenstoff von weniger als 50%, bevorzugt weniger als 30%, besonders bevorzugt weniger als 15% und ganz besonders weniger als 5% auf. Dies hat den Vorteil, dass das Schneidwerkzeug besser für die Bearbeitung von Stahl geeignet ist, da in der Beschichtung des Schneidkantenabschnitts weniger Kohlenstoff vorhanden ist, welcher in den bearbeiteten Stahl wandern kann.

Alternativ dazu besteht aber auch die Möglichkeit, dass die Beschichtung einen Gewichtsanteil an Kohlenstoff aufweist, welcher gleich oder grösser als 50% ist. So kann beispielsweise eine Schicht der Beschichtung oder die gesamte Beschichtung aus Diamant gefertigt sein. Eine derartige Alternative hat den Vorteil, dass die Beschichtung eine grössere Härte und damit eine grössere Standzeit aufweist.

Vorzugsweise enthält die Beschichtung von wenigstens einem, bevorzugt von wenigstens zwei, besonders bevorzugt von wenigstens drei der Elemente Ti, Al, Cr und N einen Mengenanteil von jeweils wenigstens 10%. Dies hat den Vorteil, dass die Beschichtung einfacher mittels physikalischem Dampfauftragungsverfahren wie beispielsweise einem Bogenentladungsverfahren aufgetragen werden kann.

In einer bevorzugten Variante davon weist die Beschichtung wenigstens eine Schicht aus einer der Verbindungen TiAIN, TiAICrN, TiAICN, TiAlCrCN oder TiAlCrSiN auf. Dies hat den Vorteil, dass die Beschichtungung eine harte Schicht umfasst, welche eine hohe Standzeit des Schneidwerkzeugs ermöglicht. Besonders bevorzugt besteht die Beschichtung hingegen aus genau einer Schicht aus einer der Verbindungen TiAIN, TiAICrN, TiAICN, TiAlCrCN oder TiAlCrSiN. Dies hat den Vorteil, dass die Beschichtung eine hohe Standzeit des Schneidwerkzeugs ermöglicht und zugleich auch effizient herstellbar ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: ein spanendes Schneidwerkzeug in der Form eines Schaftfräsers mit vier Schneidkanten,
- Fig. 2: eine schematische Darstellung eines Querschnitts durch eine der vier Schneidkanten des spanenden Schneidwerkzeugs,
- Fig. 3a, b: Illustrationen, wie ein Radius eines beschichteten Schneidkantenabschnitts des spanenden Schneidwerkzeugs bestimmt wird,
- Fig. 4: eine schematische Darstellung eines Querschnitts durch eine Schneidkante eines spanenden Schneidwerkzeugs, bei welchem die Beschichtung zwei Schichten umfasst,
- Fig. 5: eine schematische Darstellung eines Querschnitts durch eine Schneidkante eines spanenden Schneidwerkzeugs, bei welchem eine mittlere Dicke der Beschichtung auf der Spankante und auf der Freifläche gleich gross ist,
- Fig. 6: eine Illustration, wie ein Teil der Beschichtung im Bereich des beschichteten Schneidkantenabschnitts erfindungsgemäss absplittert und dadurch eine neue Schneidkante gebildet wird, welche einen kleineren Radius aufweist, und
- Fig. 7: illustriert, dass sich jeder Punkt im abgesplitterten Abschnittbereich des beschichteten Schneidkantenabschnitts über einer Substratfreifläche des Substrats befindet.

Grundsätzlich sind in den Figuren gleiche Teile mit gleichen Bezugszeichen versehen.

### Wege zur Ausführung der Erfindung

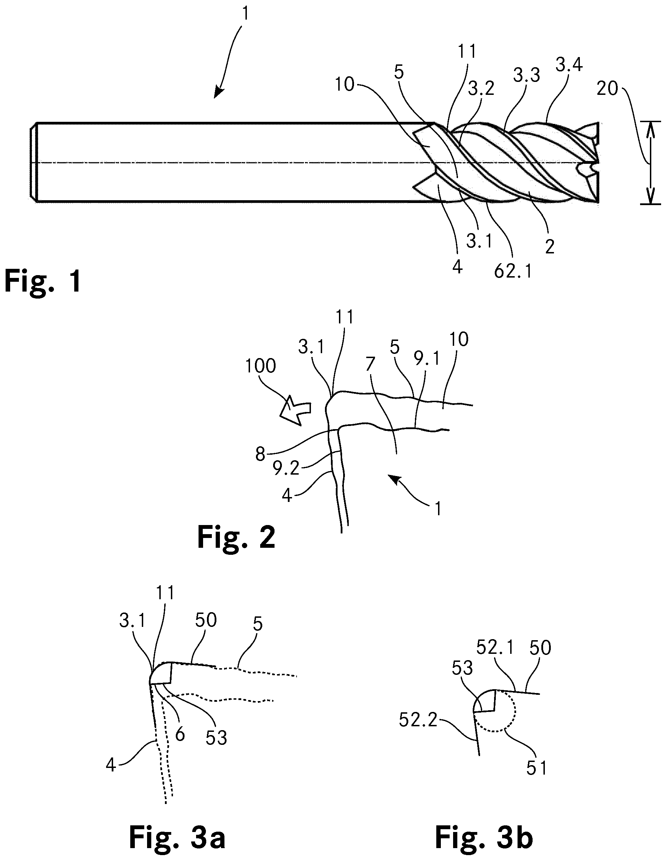

Figur 1 zeigt ein spanendes Schneidwerkzeug 1 in der Form eines Schaftfräsers. Dieses Schneidwerkzeug 1 weist einen Schneidteil 2 auf, welcher Bestandteil des Werkzeugkörpers des Schneidwerkzeugs 1 ist und einen Durchmesser 20 von 1 mm aufweist. An diesem Schneidteil 2 sind direkt vier spanabhebende Schneidkanten 3.1, 3.2, 3.3, 3.4 angeordnet. Daher handelt es sich beim Schneidwerkzeug 1 um einen Vollfräser.

Das Schneidwerkzeug 1 ist durch ein beschichtetes Substrat gebildet. Dieses Substrat besteht aus Hartmetall. Im vorliegenden Fall handelt es sich beim Hartmetall um Wolframcarbid mit Kobalt als Binder. In einer Variante dazu kann das Substrat auch aus einem anderen Hartmetall bestehen. Genauso kann das Substrat aber auch aus Cermet anstelle von Hartmetall bestehen. Im Bereich der vier Schneidkanten 3.1, 3.2, 3.3, 3.4 ist das Substrat mit einer Beschichtung 10 beschichtet. Daher werden die gesamten vier Schneidkanten 3.1, 3.2, 3.3, 3.4 durch die Beschichtung gebildet. In anderen Ausführungsformen ist hingegen das Substrat nicht im gesamten Bereich der vier Schneidkanten 3.1, 3.2, 3.3, 3.4 mit der Beschichtung 10 beschichtet. In diesen anderen Ausführungsformen ist nur ein Teil der Schneidkanten 3.1, 3.2, 3.3, 3.4 durch die Beschichtung gebildet. Bei allen Ausführungsformen ist jedoch zumindest ein Abschnitt der Schneidkanten 3.1, 3.2, 3.3, 3.4 durch die Beschichtung 10 gebildet und bildet damit einen beschichteten Schneidkantenabschnitt 11.

Figur 2 zeigt eine schematische Darstellung eines Querschnitts durch eine der vier Schneidkanten 3.1, wobei der Querschnitt senkrecht zu einer an die Schneidkante 3.1 angelegten und entlang der Schneidkante 3.1 ausgerichteten Tangente ausgerichtet ist. Dabei verläuft der Querschnitt durch den beschichteten Schneidkantenabschnitt 11 der Schneidkante 3.1. Da sich beim Schneidwerkzeug 1 der beschichtete Schneidkantenabschnitt 11 über die gesamten Schneidkanten 3.1, 3.2, 3.3, 3.4 erstreckt, steht die in Figur 2 gezeigte Darstellung stellvertretend für alle vier Schneidkanten 3.1, 3.2, 3.3, 3.4 und illustriert somit den Aufbau von allen vier Schneidkanten 3.1, 3.2, 3.3, 3.4 über die gesamten Längen der Schneidkanten 3.1, 3.2, 3.3, 3.4.

In Figur 2 ist zu erkennen, dass die Schneidkante 3.1 zwischen einer Spanfläche 4 und einer Freifläche 5 des Schneidwerkzeugs 1 angeordnet ist. Bei korrekter Verwendung des Schneidwerkzeugs 1 weist jeder Punkt der Schneidkante 3.1 eine Vorschubrichtung auf, welche in der Figur 2 durch einen Pfeil 100 angezeigt ist. Dabei ist die an der Schneidkante 3.1 am jeweiligen Punkt anliegende Spanfläche 4 im Wesentlichen in Vorschubrichtung des jeweiligen Punkts ausgerichtet, während die an der Schneidkante 3.1 an diesem Punkt anliegende Freifläche 5 im Wesentlichen parallel zur Vorschubrichtung dieses Punkts ausgerichtet ist. Bei der spanenden Bearbeitung eines Werkstücks mit dem Schneidwerkzeug 1 läuft daher ein Span, welcher mit dem Schneidwerkzeug 1 aus dem Werkstück gehoben wird, entlang der Spanfläche 4 ab.

In der Darstellung des Querschnitts der Schneidkante 3.1 der Figur 2 ist zu erkennen, dass ein Quotient aus einem Radius des beschichteten Schneidkantenabschnitts 11 geteilt durch eine lokale Dicke der Beschichtung 10 kleiner als 0.9 ist. Beim in Figur 2 gezeigten Schneidwerkzeug 1 ist dies für alle Punkte des beschichteten Schneidkantenabschnitts 11 und damit für alle Punkte der Schneidkanten 3.1, 3.2, 3.3, 3.4 der Fall. Dabei wird für jeden Punkt des beschichteten Schneidkantenabschnitts 11 bzw. der Schneidkanten 3.1, 3.2, 3.3, 3.4 davon ausgegangen, dass sich der Punkt der Schneidkante 3.1 auf einer Oberfläche des Schneidwerkzeugs 1 befindet, weil die Schneidkante 3.1 auf der Oberfläche des Schneidwerkzeugs 1 liegt. Entsprechend ist die lokale Dicke der Beschichtung 10 an diesem Punkt die kleinste Distanz des Punktes vom Substrat 7.

In einer anderen Ausführungsform, in welcher sich der beschichtete Schneidkantenabschnitt 11 nur über einen Teil der Schneidkanten 3.1, 3.2, 3.3, 3.4 der erstreckt, besteht ebenfalls die Möglichkeit, dass im gesamten beschichteten Schneidkantenabschnitt 11 der Quotient aus dem Radius des beschichteten Schneidkantenabschnitts 11 geteilt durch die lokale Dicke der Beschichtung 10 kleiner als 0.9 ist. Unabhängig davon, ob sich der beschichtete Schneidkantenabschnitt 11 über die gesamten Schneidkanten 3.1, 3.2, 3.3, 3.4 erstreckt oder nicht, besteht aber auch die Möglichkeit, dass dieser Quotient nur innerhalb eines Abschnittbereichs des beschichteten Schneidkantenabschnitts 11 kleiner als 0.9 ist. In einer ersten Ausführungsvariante davon erstreckt sich der Abschnittsbereich des beschichteten Schneidkantenabschnitts 11 über 80% des beschichteten Schneidkantenabschnitts 11. In einer zweiten Ausführungsvariante davon erstreckt sich der Abschnittsbereich des beschichteten Schneidkantenabschnitts 11 über 90% des beschichteten Schneidkantenabschnitts 11.

In anderen, ansonsten identischen Ausführungsbeispielen ist der Quotient jeweils nicht nur kleiner als 0.9, sondern kleiner als 0.6. In weiteren, ansonsten identischen Ausführungsbeispielen hingegen ist der Quotient jeweils nicht nur kleiner als 0.9 oder 0.6, sondern kleiner als 0.3.

Figuren 3a und 3b illustrieren, wie der Radius 6 des beschichteten Schneidkantenabschnitts 11 für die Bestimmung des Quotienten bestimmt wird. Figur 3a zeigt hierzu den bereits in Figur 2 gezeigten Querschnitt der Schneidkante 3.1, wobei in Figur 3a der Querschnitt jedoch nur mit gestrichelten Linien dargestellt ist. Weiter zeigt Figur 3a eine Linie 50, anhand von welcher der Radius 6 des beschichteten Schneidkantenabschnitts 11 bestimmt wird. Figur 3b hingegen illustriert, wie die Linie 50 aufgebaut ist.

Die Linie 50 liegt in einer Ebene, welche senkrecht zu einer an den jeweiligen Punkt an der Schneidkante 3.1 anliegenden und entlang der Schneidkante 3.1 ausgerichteten Tangente ausgerichtet ist. Damit entspricht diese Ebene in den Figuren 2 und 3a jeweils der Bildebene. Wie in Figur 3b ersichtlich, besteht die Linie 50 aus einem Kreisabschnitt eines Kreises 51 sowie einem ersten Endbereich 52.1 und einem zweiten Endbereich 52.2. Als erster Endbereich 52.1 weist die Linie 50 an einem ersten Ende des Kreisabschnitts einen ersten Längenabschnitt einer dort an den Kreis 51 anliegenden ersten Tangente auf. Als zweiter Endbereich 52.2 weist die Linie 50 an einem zweiten Ende des Kreisabschnitts einen zweiten Längenabschnitt einer dort an den Kreis 51 anliegenden zweiten Tangente auf. Dabei ist die Linie 50 stetig differenzierbar. Zudem ist der erste Endbereich 52.1 der Linie 50 parallel zur Freifläche 5 ausgerichtet, während der zweite Endbereich 52.2 der Linie 50 parallel zur Spanfläche 4 ausgerichtet ist. Im vorliegenden Fall sind der erste und der zweite Längenabschnitt bzw. Endbereich 52.1, 52.2 je 5 µm lang. In einer weiteren Ausführungsform sind sie hingegen je 10 µm lang.

Wie in Figur 3a illustriert, sind ein Radius 53 des Kreises 51 sowie eine Position des Kreises 51 dadurch bestimmt, dass der Abstand der in der senkrecht zur an der Schneidkante 3.1 anliegenden und entlang der Schneidkante 3.1 ausgerichteten Tangente ausgerichteten Ebene verlaufenden Linie 50 von der Oberfläche des Schneidwerkzeugs 1 minimal ist. Das bedeutet, dass für jeden Punkt der Linie 50 der Abstand der Linie 50 von der Oberfläche des Schneidwerkzeugs 1 betrachtet wird und dass die Summe bzw. das Integral der Abstände aller Punkte der Linie 50 von der Oberfläche des Schneidwerkzeugs 1 minimal ist, wenn die Linie 50 korrekt positioniert ist. Wenn die Linie 50 auf diese Weise korrekt positioniert ist, ist der Radius 53 des Kreises 51 zugleich der Radius 6 des beschichteten Schneidkantenabschnitts 11 am entsprechenden Punkt des beschichteten Schneidkantenabschnitts 11.

Beim Schneidwerkzeug 1, welches anhand der Figuren 1 bis 3b illustriert ist, besteht die Beschichtung 10 aus einer einzigen Schicht. Diese Schicht besteht aus TiAIN und wurde mittels einem physikalischen Verdampfungsverfahren, genauer mittels einem Bogenentladungsverfahren auf das Substrat 7 aufgetragen. In weiteren Ausführungsbeispielen hingegen besteht die Schicht aus TiAICrN, TiAICN, TiAlCrCN bzw. TiAlCrSiN und wurde ebenfalls mittels einem physikalischen Verdampfungsverfahren, genauer mittels einem Bogenentladungsverfahren auf das Substrat 7 aufgetragen. Die Schicht kann aber auch aus einem anderen Material bestehen. Bevorzugt enthält die Beschichtung von wenigstens einem, bevorzugt von wenigstens zwei, besonders bevorzugt von wenigstens drei der Elemente Ti, Al, Cr und N einen Mengenanteil von jeweils wenigstens 10%. In einem weiteren Ausführungsbeispiel hingegen besteht die Schicht aus Diamant. In diesem Fall wurde die Schicht bevorzugt mittels eines chemischen Verdampfungsverfahrens aufgetragen.

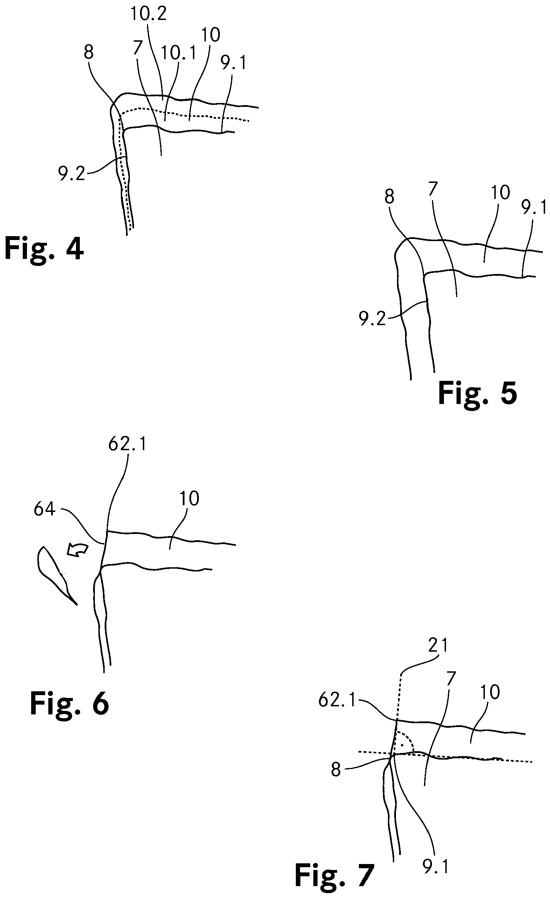

Die Beschichtung 10 kann auch mehr als eine Schicht umfassen. Ein Beispiel dafür ist in Figur 4 gezeigt, wo analog zur Figur 2 ein Querschnitt durch eine Schneidkante des Schneidwerkzeugs dargestellt ist. Im Beispiel gemäss Figur 4 umfasst die Beschichtung 10 zwei Schichten 10.1, 10.2. In weiteren, in den Figuren nicht gezeigten Ausführungsbeispielen umfasst die Beschichtung 10 mehr als zwei Schichten. So kann sie beispielsweise drei, vier oder auch mehr Schichten umfassen. In diesen Fällen kann beispielsweise eine der Schichten der Beschichtung 10 aus einer der Verbindungen TiAIN, TiAICrN, TiAICN, TiAlCrCN oder TiAlCrSiN oder auch aus Diamant bestehen. Auch können mehrere Schichten der Beschichtung 10 aus einer dieser Verbindungen bestehen.

Wenn die Beschichtung 10 nur eine Schicht aus TiAl, TiAlCrN oder TiAlCrSiN aufweist, so ist der Gewichtsanteil an Kohlenstoff an der Beschichtung 10 selbst mit Verunreinigungen aus Kohlenstoff kleiner als 5%. Wenn die Beschichtung 10 hingegen nur aus TiAICN oder TiAlCrCN besteht, so ist der Gewichtsanteil an Kohlenstoff an der Beschichtung selbst mit Verunreinigungen kleiner als 15%. Falls die Beschichtung 10 mehr als eine Schicht aufweist, so kann der Gewichtsanteil an Kohlenstoff an der Beschichtung 10 ebenfalls kleiner als 5% oder kleiner als 15% sein. Es besteht aber auch die Möglichkeit, dass der Gewichtsanteil des Kohlenstoffs an der Beschichtung 10 weniger als 50% oder weniger als 30% beträgt. Dies kann beispielsweise zutreffen, wenn die Beschichtung 10 zwei oder mehr Schichten aufweist und eine der Schichten aus Diamant besteht.

In den Beispielen, welche anhand der Figuren 1 bis 4 illustriert sind, ist die Beschichtung 10 jeweils direkt auf dem Substrat 7 aufgebracht. Das heisst, dass keine Zwischenschicht zwischen der Beschichtung 10 und dem Substrat 7 vorhanden ist. In Varianten besteht aber auch die Möglichkeit, dass zwischen der Beschichtung 10 und dem Substrat 7 noch eine Zwischenschicht aufgebracht ist. Dies kann beispielsweise der Fall sein, um die Erhöhung der Haftung der Beschichtung 10 auf dem Substrat 7 zu erhöhen.

Wie in Figuren 2, 3a und 4 zu erkennen ist, ist die Beschichtung 10 auf dem Substrat 7 aufgebracht. Dabei bildet das unter der Beschichtung 10 liegende Substrat 7 eine Substratkante 8, wobei auf einer ersten Seite der Substratkante 8 eine Substratspanfläche 9.2 und auf einer der ersten Seite der Substratkante 8 gegenüberliegenden Seite eine Substratfreifläche 9.1 anliegt.

Bei korrekter Verwendung des Schneidwerkzeugs 1 weist jeder Punkt der Substratkante 8 eine Vorschubrichtung auf. Diese Vorschubrichtung der Substratkante 8 ist in Figur 2 ebenfalls durch den Pfeil 100 illustriert. Dabei ist die an der Substratkante 8 am jeweiligen Punkt anliegende Substratspanfläche 9.2 im Wesentlichen in Vorschubrichtung des jeweiligen Punkts ausgerichtet, während die an der Substratkante 8 an diesem Punkt anliegende Substratfreifläche 9.1 im Wesentlichen parallel zur Vorschubrichtung des Punkts ausgerichtet ist.

Wie in den Figuren 2, 3a und 4 ersichtlich, ist eine mittlere Dicke der Beschichtung 10 auf der Substratspanfläche 9.2 geringer als eine mittlere Dicke der Beschichtung 10 auf der Substratfreifläche 9.1. Dabei ist die mittlere Dicke der Beschichtung 10 auf der Substratspanfläche 9.2 ein Mittelwert der Dicke der Beschichtung 10 in einem Bereich der Substratspanfläche 9.2, welcher sich entlang dem beschichteten Schneidkantenabschnitt 11 erstreckt und über seine gesamte Länge an die Substratkante 8 anliegt und sich von der Substratkante bis 10 µm von der Substratkante 8 weg erstreckt. Weiter ist die mittlere Dicke der Beschichtung 10 auf der Substratfreifläche 9.1 ein Mittelwert der Dicke der Beschichtung 10 in einem Bereich der Substratfreifläche 9.1, welcher sich entlang dem beschichteten Schneidkantenabschnitt 11 erstreckt und über seine gesamte Länge an die Substratkante 8 anliegt und sich von der Substratkante bis 10 µm von der Substratkante 8 weg erstreckt. Wie in Figur 5 illustriert, ist in anderen Ausführungsformen hingegen die mittlere Dicke der Beschichtung 10 auf der Substratspanfläche 9.2 gleich gross wie die mittlere Dicke der Beschichtung 10 auf der Substratfreifläche 9.1.

Unabhängig von der Anzahl Schichten der Beschichtung 10 und unabhängig davon, ob die mittlere Dicke der Beschichtung 10 auf der Substratspanfläche 9.2 gleich gross oder kleiner oder grösser als die mittlere Dicke der Beschichtung auf der Substratfreifläche 9.1 ist, weist beim Schneidwerkzeug 1 die Beschichtung 10 zumindest im Abschnittbereich des beschichteten Schneidkantenabschnitts 11, in welchem der Quotient kleiner als 0.9, kleiner als 0.6, bzw. kleiner als 0.3 ist, an jedem Punkt des Abschnittbereichs eine lokale Dicke von mehr als 10 µm auf. Ein Mittelwert der Dicke der Beschichtung 10 in einem über diesen gesamten Abschnittbereich an den beschichteten Schneidkantenabschnitt 11 anliegenden Bereich der im Abschnittbereich an den beschichteten Schneidkantenabschnitt 11 anliegenden Freifläche 5 beträgt 11 µm. Dabei reicht der über den gesamten Abschnittbereich an den beschichteten Schneidkantenabschnitt 11 anliegende Bereich von der Schneidkante 3.1, 3.2, 3.3, 3.4 bis 10 µm von der Schneidkante 3.1, 3.2, 3.3, 3.4 weg. Dabei ist der Mittelwert der Dicke der Beschichtung 10 eine mittlere Dicke der Beschichtung 10. Da der Durchmesser 20 des Schneidteils 2 wie bereits erwähnt 1 mm beträgt, ist somit der Durchmesser 20 des Schneidteils 2 um den Faktor 90.91 mal dicker als die mittlere Dicke der Beschichtung 10. In einer weiteren Ausführungsform beträgt die mittlere Dicke der Beschichtung 10 im über den gesamten Abschnittbereich an den beschichteten Schneidkantenabschnitt 11 anliegenden Bereich der an den beschichteten Schneidkantenabschnitt 11 anliegenden Freifläche 5 10 µm. In diesem Fall ist der Durchmesser 20 des Schneidteils 2 um den Faktor 100 mal dicker als die mittlere Dicke der Beschichtung 10.

In einem weiteren Ausführungsbeispiel weist die Beschichtung 10 zumindest im Abschnittbereich des beschichteten Schneidkantenabschnitts 11, in welchem der Quotient kleiner als 0.9, kleiner als 0.6, bzw. kleiner als 0.3 ist, an jedem Punkt des beschichteten Schneidkantenabschnitts 11 eine lokale Dicke von mehr als 5 µm auf. Ein Mittelwert der Dicke der Beschichtung 10 im über den gesamten Abschnittbereich an den beschichteten Schneidkantenabschnitt 11 anliegenden Bereich der an den beschichteten Schneidkantenabschnitt 11 anliegenden Freifläche 5 beträgt dabei 6 µm. Dabei erstreckt sich der an den Abschnittbereich des beschichteten Schneidkantenabschnitts 11 anliegende Bereich von der Schneidkante 3.1, 3.2, 3.3, 3.4 bis 10 µm von der Schneidkante 3.1, 3.2, 3.3, 3.4 weg. Somit ist der Durchmesser des Schneidteils 2 um den Faktor 166.67 mal dicker als die mittlere Dicke der Beschichtung 10. In einer weiteren Ausführungsform beträgt die mittlere Dicke der Beschichtung 10 im an den Abschnittbereich des beschichteten Schneidkantenabschnitt 11 anliegenden Bereich der an den beschichteten Schneidkantenabschnitt 11 anliegenden Freifläche 5 5 µm. In diesem Fall ist der Durchmesser 20 des Schneidteils 2 um den Faktor 200 mal dicker als die mittlere Dicke der Beschichtung 10.

In anderen Ausführungsformen weist die Beschichtung 10 zumindest im Abschnittbereich des beschichteten Schneidkantenabschnitts 11 jeweils eine lokale Dicke von mehr als 7 µm, mehr als 15 µm oder mehr als 20 µm auf. Dabei weist die mittlere Dicke im über den gesamten Abschnittbereich des beschichteten Schneidkantenabschnitts 11 an den beschichteten Schneidkantenabschnitt 11 anliegenden Bereich der an den beschichteten Schneidkantenabschnitt 11 anliegenden Freifläche 5 einen Wert von 8 µm, 16 µm, 21 µm, 30 µm auf. Die lokale Dicke und die mittlere Dicke können aber auch andere Werte aufweisen.

In weiteren Ausführungsformen ist der Durchmesser des Schneidteils 2 nicht 1 mm. Der Durchmesser des Schneidteils 2 kann auch kleiner oder grösser als 1 mm sein. Beispielsweise kann der Durchmesser auch 0.5 mm, 1.5 mm, 2 mm, 2.5 mm oder 3 mm betragen. Genauso kann der Durchmesser des Schneidteils 2 aber auch grösser als 3 mm sein.

In einem Ausführungsbeispiel weist der Schneidteil 2 somit einen Durchmesser von 3 mm auf, während die Beschichtung 10 zumindest im Abschnittbereich des beschichteten Schneidkantenabschnitts 11, in welchem der Quotient kleiner als 0.9, kleiner als 0.6, bzw. kleiner als 0.3 ist, an jedem Punkt des beschichteten Schneidkantenabschnitts 11 eine lokale Dicke von mehr als 7 µm aufweist. Ein Mittelwert der Dicke der Beschichtung 10 im über den gesamten Abschnittbereich an den beschichteten Schneidkantenabschnitt 11 anliegenden Bereich der an den beschichteten Schneidkantenabschnitt 11 anliegenden Freifläche 5 beträgt dabei 12 µm. Dabei erstreckt sich der an den Abschnittbereich des beschichteten Schneidkantenabschnitts 11 anliegende Bereich von der Schneidkante 3.1, 3.2, 3.3, 3.4 bis 10 µm von der Schneidkante 3.1, 3.2, 3.3, 3.4 weg. Somit ist der Durchmesser des Schneidteils 2 um den Faktor 250 mal dicker als die mittlere Dicke der Beschichtung 10. In einer weiteren Ausführungsform beträgt die mittlere Dicke der Beschichtung 10 im an den Abschnittbereich des beschichteten Schneidkantenabschnitt 11 anliegenden Bereich der an den beschichteten Schneidkantenabschnitt 11 anliegenden Freifläche 5 10 µm. In diesem Fall ist der Durchmesser 20 des Schneidteils 2 um den Faktor 300 mal dicker als die mittlere Dicke der Beschichtung 10.

In einem weiteren Ausführungsbeispiel weist der Schneidteil 2 einen Durchmesser von 3 mm auf, während die Beschichtung 10 zumindest im Abschnittbereich des beschichteten Schneidkantenabschnitts 11, in welchem der Quotient kleiner als 0.9, kleiner als 0.6, bzw. kleiner als 0.3 ist, an jedem Punkt des beschichteten Schneidkantenabschnitts 11 eine lokale Dicke von mehr als 5 µm aufweist. Ein Mittelwert der Dicke der Beschichtung 10 im über den gesamten Abschnittbereich an den beschichteten Schneidkantenabschnitt 11 anliegenden Bereich der an den beschichteten Schneidkantenabschnitt 11 anliegenden Freifläche 5 beträgt dabei 6 µm. Dabei erstreckt sich der an den Abschnittbereich des beschichteten Schneidkantenabschnitts 11 anliegende Bereich von der Schneidkante 3.1, 3.2, 3.3, 3.4 bis 10 µm von der Schneidkante 3.1, 3.2, 3.3, 3.4 weg. Somit ist der Durchmesser des Schneidteils 2 um den Faktor 500 mal dicker als die mittlere Dicke der Beschichtung 10. In einer weiteren Ausführungsform beträgt die mittlere Dicke der Beschichtung 10 im an den Abschnittbereich des beschichteten Schneidkantenabschnitt 11 anliegenden Bereich der an den beschichteten Schneidkantenabschnitt 11 anliegenden Freifläche 5 5 µm. In diesem Fall ist der Durchmesser 20 des Schneidteils 2 um den Faktor 600 mal dicker als die mittlere Dicke der Beschichtung 10.

Schneidwerkzeuge gemäss den vorgenannten Ausführungsformen und Ausführungsbeispielen können auf unterschiedliche Art und Weise hergestellt werden. Beispielsweise kann das Substrat 7 zuerst geformt und danach mit der Beschichtung 10 beschichtet werden. Danach kann die Beschichtung in den Bereichen des beschichteten Schneidkantenabschnitts 11 nachgearbeitet werden, damit die Schneidkanten 3.1, 3.2, 3.3, 3.4 derart geformt sind, dass zumindest innerhalb eines Abschnittbereichs des beschichteten Schneidkantenabschnitts 11 an jedem Punkt des beschichteten Schneidkantenabschnitts 11 der Quotient aus dem Radius des beschichteten Schneidkantenabschnitts 11 am jeweiligen Punkt geteilt durch die lokale Dicke der Beschichtung 10 je nach Ausführungsform kleiner als 0.9, kleiner als 0.6 bzw. kleiner als 0.3 ist. Eine derartige Nachbearbeitung kann beispielsweise durch Schleifen, Honen oder eine Laserbearbeitung erfolgen.

Ein Quotient von 0.9, 0.6 bzw. 0.3 aus dem Radius des beschichteten Schneidkantenabschnitts 11 am jeweiligen Punkt geteilt durch die lokale Dicke der Beschichtung 10 zumindest innerhalb eines Abschnittbereichs des beschichteten Schneidkantenabschnitts 11 kann auch ohne Nachbearbeitung der Schneidkanten 3.1, 3.2, 3.3, 3.4 erreicht werden. Ein erfindungsgemässes Beispiel dafür ist in Figur 6 illustriert: Wenn der Durchmesser 20 des Schneidteils 2 um einen Faktor von höchstens 600 mal dicker als die mittlere Dicke der Beschichtung 10 gewählt wird, splittert beim Herstellen des Schneidwerkzeugs ein Teil der Beschichtung 10 nach ihrer Auftragung aufgrund von Spannungen im Bereich der Schneidkante ab, wodurch eine Bruchstelle entsteht. Diese Bruchstelle bildet wie in Figur 6 gezeigt eine neue Spanfläche 64 sowie eine neue Schneidkante 62.1. Diese neue Schneidkante 62.1 weist einen Radius auf, welcher deutlich kleiner ist als der Radius der Beschichtung 10 vor dem Absplittern. Damit wird in den erfindungsgemäss abgesplitterten Bereichen der Quotient aus dem Radius des beschichteten Schneidkantenabschnitts 11 geteilt durch die lokale Dicke der Beschichtung 10 aufgrund der Absplitterung kleiner. Je kleiner dabei der Faktor ist, um welchen der Durchmesser 20 des Schneidteils 2 grösser als die mittlere Dicke der Beschichtung 10 ist, desto grösser ist die Wahrscheinlichkeit, dass Bereiche des beschichteten Schneidkantenabschnitts 11 absplittern und in diesen abgesplitterten Bereichen eine neue Schneidkante 62.1 mit kleinerem Radius und entsprechend grösserem Quotienten gebildet wird. Aus diesem Grund wird auch der Abschnittbereich des beschichteten Schneidkantenabschnitts 11, in welchem an jedem Punkt des beschichteten Schneidkantenabschnitts 11 der Quotient aus dem Radius des beschichteten Schneidkantenabschnitts 11 am jeweiligen Punkt geteilt durch die lokale Dicke der Beschichtung kleiner als 09, kleiner als 0.6 bzw. kleiner als 0.3 ist, auch grösser, je kleiner der Faktor ist. Aus diesem Grund wird der Durchmesser 20 des Schneidteils 2 auch besonders bevorzugt nicht nur um einen Faktor höchstens 600, sondern um einen Faktor von höchstens 300 oder sogar um einen Faktor von höchstens 100 mal dicker als die mittlere Dicke der Beschichtung 10 gewählt.

Wenn im Bereich des beschichteten Schneidkantenabschnitts 11 wie in Figur 6 illustriert ein Teil der Beschichtung 10 absplittert und eine neue Schneidkante 62.1 bildet, so befindet sich jeder Punkt im abgesplitterten Abschnittbereich des beschichteten Schneidkantenabschnitts 11 über der Substratfreifläche 9.1. Wie in Figur 7 illustriert, bedeutet dies, dass durch jeden Punkt im Abschnittbereich des beschichteten Schneidkantenabschnitts 11 eine senkrecht zur Substratfreifläche 9.1 stehende Normale 21 verläuft. Somit wird die Schneidkante 62.1 im Gebrauch des Schneidwerkzeugs 1 zumindest innerhalb des Abschnittbereichs des beschichteten Schneidkantenabschnitts 11 an jedem Punkt des beschichteten Schneidkantenabschnitts 11 in eine Vorschubrichtung bewegt, wobei bei der Bewegung der jeweilige Punkt der Schneidkante 62.1 der nächstliegenden Substratkante 8 nachfolgt. Ausserdem ist dabei eine Länge der Normalen 21 von der Substratfreifläche 9.1 zum jeweiligen Punkt im Abschnittbereich des beschichteten Schneidkantenabschnitts 11 die kürzeste Distanz dieses Punktes vom Substrat 7 und entspricht somit der lokalen Dicke der Beschichtung 10 an diesem Punkt.

In nicht erfindungsgemässen Varianten zu den in Figuren 6 und 7 illustrierten Ausführungsformen, wo die Schneidkante erfindungsgemäss durch Absplittern eines Teils des beschichteten Schneidkantenabschnitts gebildet wird, besteht wie bereits erwähnt auch die Möglichkeit, dass ohne Absplittern erreicht wird, dass zumindest in einem Abschnittbereich des beschichteten Schneidkantenabschnitts an jedem Punkt des beschichteten Schneidkantenabschnitts der Quotient aus dem Radius des beschichteten Schneidkantenabschnitts am jeweiligen Punkt geteilt durch die Lokale Dicke der Beschichtung kleiner als 0.9, kleiner als 0.6 bzw. kleiner als 0.3 ist. Dabei kann auch erreicht werden, dass sich jeder Punkt im Abschnittbereich des beschichteten Schneidkantenabschnitts über der Substratfreifläche befindet. Eine Möglichkeit, um dies zu erreichen, ist wiederum eine Nachbearbeitung der Beschichtung 10 beispielsweise durch Schleifen, Honen oder mittels einer Laserbearbeitung.

Die Erfindung ist nicht auf die oben genannten Ausführungsformen und Ausführungsbeispiele beschränkt. Weiter ist nicht erforderlich, dass ein Winkel zwischen den Freiflächen und den Spanflächen im Bereich der Schneidkanten wie in den Figuren illustriert ein spitzer Winkel ist. Es besteht auch die Möglichkeit, dass der Winkel zwischen den Freiflächen und den Spanflächen ein flacher Winkel von zum Beispiel 100 Grad ist. Zusammenfassend ist festzustellen, dass im vorliegenden Text ein spanendes Schneidwerkzeug, welches ein Vollfräser ist, beschrieben wird, welches bzw. welcher eine längere Standzeit als bekannte Schneidwerkzeuge aufweist.

## Patentansprüche

1. Verfahren zur Herstellung eines spanenden Schneidwerkzeugs (1), welches ein Vollfräser ist und ein zumindest teilweise mit einer Beschichtung (10) beschichtetes Substrat (7) aus Hartmetall oder Cermet umfasst, wobei das Schneidwerkzeug (1) wenigstens eine Spanfläche (64) und wenigstens eine Freifläche (5), zwischen welchen wenigstens eine Schneidkante (62.1) angeordnet ist, aufweist, wobei zumindest ein Abschnitt der wenigstens einen Schneidkante (62.1) durch die Beschichtung (10) gebildet ist und damit einen beschichteten Schneidkantenabschnitt (11) bildet, wobei zumindest innerhalb eines Abschnittbereichs des beschichteten Schneidkantenabschnitts (11) an jedem Punkt des beschichteten Schneidkantenabschnitts (11) ein Quotient aus einem Radius (6) des beschichteten Schneidkantenabschnitts (11) am jeweiligen Punkt geteilt durch eine lokale Dicke der Beschichtung (10) kleiner als 0.9 ist, **dadurch gekennzeichnet, dass** das Substrat (7) mit der Beschichtung (10) beschichtet wird, wobei, damit zumindest innerhalb des Abschnittbereichs des beschichteten Schneidkantenabschnitts (11) an jedem Punkt des beschichteten Schneidkantenabschnitts (11) der Quotient aus dem Radius (6) des beschichteten Schneidkantenabschnitts (11) am jeweiligen Punkt geteilt durch die lokale Dicke der Beschichtung (10) kleiner als 0.9 ist, das Schneidwerkzeug (1) ein Schneidteil (2) mit einem Durchmesser (20) aufweist und die Beschichtung (10) mit einer mittleren Dicke aufgetragen wird, dass der Durchmesser (20) des Schneidteils (2) um einen Faktor von höchstens 600, bevorzugt höchstens 300, besonders bevorzugt höchstens 100 grösser als die mittlere Dicke der Beschichtung (10) ist, wobei die mittlere Dicke ein Mittelwert der Dicke der Beschichtung (10) in einem über den gesamten Abschnittbereich des beschichteten Schneidkantenabschnitts (11) an den Abschnittbereich anliegenden Bereich der an den Abschnittbereich anliegenden wenigstens einen Freifläche (5) ist, wodurch nach der Auftragung der Beschichtung (10) ein Teil der Beschichtung (10) der Schneidkante (62.1) absplittert und dadurch eine neue Schneidkante (62.1) bildet, wobei eine Bruchstelle, an welcher der Teil der Beschichtung (10) abgesplittert ist, eine neue Spanfläche (64) bildet, wodurch innerhalb des Abschnittbereichs des beschichteten Schneidkantenabschnitts (11) an jedem Punkt des beschichteten Schneidkantenabschnitts (11) der Quotient aus dem Radius (6) des beschichteten Schneidkantenabschnitts (11) am jeweiligen Punkt geteilt durch die lokale Dicke der Beschichtung kleiner als 0.9 ist, wobei sich der Abschnittbereich des beschichteten Schneidkantenabschnitts über mindestens 80% des beschichteten Schneidkantenabschnitts erstreckt.

2. Verfahren nach Anspruch 1, **dadurch gekennzeichnet, dass** für die Bestimmung des Quotienten am jeweiligen Punkt des beschichteten Schneidkantenabschnitts (11) der Radius des beschichteten Schneidkantenabschnitts (11) am jeweiligen Punkt verwendet wird, wobei
der Radius (6) des beschichteten Schneidkantenabschnitts (11) am jeweiligen Punkt ein Radius (53) eines Kreises (51) ist, welcher in einer an dem jeweiligen Punkt anliegenden Ebene liegt, wobei die Ebene senkrecht zu einer an den jeweiligen Punkt an den beschichteten Schneidkantenabschnitt (11) und damit an den jeweiligen Punkt an der Schneidkante (3.1, 3.2, 3.3, 3.4, 62.1) anliegenden und entlang der Schneidkante (3.1, 3.2, 3.3, 3.4, 62.1) ausgerichteten Tangente ausgerichtet ist, wobei ein Abstand einer in der Ebene verlaufenden Linie (50), welche aus einem Kreisabschnitt des Kreises (51), einem ersten Endbereich (52.1) und einem zweiten Endbereich (52.2) besteht, von einer Oberfläche des Schneidwerkzeugs (1) minimal ist, wobei
die Linie (50) stetig differenzierbar ist und an einem ersten Ende des Kreisabschnitts als erster Endbereich (52.1) ein erster Längenabschnitt einer an den Kreis (51) anliegenden ersten Tangente aufweist, welche parallel zur dortigen Freifläche (5) ausgerichtet ist, und an einem zweiten Ende des Kreisabschnitts als zweiter Endbereich (52.2) ein zweiter Längenabschnitt einer an den Kreis (51) anliegenden zweiten Tangente umfasst, welche parallel zur dortigen Spanfläche (4) ausgerichtet ist, wobei der erste und der zweite Längenabschnitt bzw. Endbereich (52.1, 52.2) je 5 µm, insbesondere 10 µm lang sind.

3. Verfahren nach einem der Ansprüche 1 bis 2, **dadurch gekennzeichnet, dass** der Quotient aus dem Radius (6) der Schneidkante (3.1, 3.2, 3.3, 3.4, 62.1) geteilt durch die lokale Dicke der Beschichtung (10) kleiner als 0.6 oder kleiner als 0.3 ist.

4. Verfahren nach einem der Ansprüche 1 bis 3, **dadurch gekennzeichnet, dass** die Beschichtung (10) eine einzige Schicht umfasst.

5. Verfahren nach einem der Ansprüche 1 bis 3, **dadurch gekennzeichnet, dass** die Beschichtung (10) zwei oder mehr Schichten (10.1, 10.2) umfasst.

6. Verfahren nach einem der Ansprüche 1 bis 5, **dadurch gekennzeichnet, dass** im gesamten Abschnittbereich des beschichteten Schneidkantenabschnitts (11) die Beschichtung (10) direkt auf dem Substrat (7) aufgebracht ist.

7. Verfahren nach einem der Ansprüche 1 bis 6, **dadurch gekennzeichnet, dass** innerhalb des Abschnittbereichs des beschichteten Schneidkantenabschnitts (11) an jedem Punkt des beschichteten Schneidkantenabschnitts (11) die lokale Dicke der Beschichtung (10) grösser als 5 µm, bevorzugt grösser als 7 µm, bevorzugt grösser als 10 µm, besonders bevorzugt grösser als 15 µm und ganz besonders bevorzugt grösser als 20 µm ist.

8. Verfahren nach einem der Ansprüche 1 bis 7, **dadurch gekennzeichnet, dass** jeder Punkt im Abschnittbereich des beschichteten Schneidkantenabschnitts (11) durch einen Bereich der Beschichtung (10) gebildet ist, in welchem das unter der Beschichtung (10) liegende Substrat (7) eine Substratkante (8) bildet, wobei auf einer ersten Seite der Substratkante (8) eine Substratspanfläche (9.2) anliegt und auf einer der ersten Seite der Substratkante (8) gegenüberliegenden Seite der Substratkante (8) eine Substratfreifläche (9.1) anliegt.

9. Verfahren nach Anspruch 8, **dadurch gekennzeichnet, dass** jeder Punkt im Abschnittbereich des beschichteten Schneidkantenabschnitts (11) über der Substratfreifläche (9.1) verläuft.

10. Verfahren nach Anspruch 8 oder 9, **dadurch gekennzeichnet, dass** eine mittlere Dicke der Beschichtung (10) auf der Substratspanfläche (9.2) geringer als eine mittlere Dicke der Beschichtung (10) auf der Substratfreifläche (9.1) ist.

11. Verfahren nach Anspruch 10, **dadurch gekennzeichnet, dass** das Schneidteil (2) einen Durchmesser (20) von 3 mm oder weniger, 2 mm oder weniger, oder 1 mm oder weniger aufweist.

12. Verfahren nach einem der Ansprüche 1 bis 11, **dadurch gekennzeichnet, dass** die Beschichtung (10) einen Gewichtsanteil an Kohlenstoff von weniger als 50%, bevorzugt weniger als 30%, besonders bevorzugt weniger als 15% und ganz besonders weniger als 5% aufweist.

13. Verfahren nach einem der Ansprüche 1 bis 12, **dadurch gekennzeichnet, dass** die Beschichtung (10) von wenigstens einem, bevorzugt wenigstens zwei, besonders bevorzugt wenigstens drei der Elemente Ti, AI, Cr und N einen Mengenanteil von jeweils wenigstens 10% enthält.

## Claims

1. Method for producing a chip-generating cutting tool (1) which is a solid milling cutter and comprises a substrate (7) which is made of carbide or cermet and is at least partially coated with a coating (10), wherein the cutting tool (1) has at least one rake surface (64) and at least one flank surface (5), between which at least one cutting edge (62.1) is arranged, wherein at least one segment of the at least one cutting edge (62.1) is formed by the coating (10) and therefore forms a coated cutting-edge segment (11), wherein, at each point of the coated cutting-edge segment (11) at least within a segment region of the coated cutting-edge segment (11), a quotient made up of a radius (6) of the coated cutting-edge segment (11) at the respective point divided by a local thickness of the coating (10) is smaller than 0.9,
**characterized in that** the substrate (7) is coated with the coating (10), wherein, so that, at each point of the coated cutting-edge segment (11) at least within the segment region of the coated cutting-edge segment (11), the quotient made up of the radius (6) of the coated cutting-edge segment (11) at the respective point divided by the local thickness of the coating (10) is smaller than 0.9, the cutting tool (1) has a cutting part (2) with a diameter (20) and the coating (10) is applied with an average thickness, **in that** the diameter (20) of the cutting part (2) is greater than the average thickness of the coating (10) by a factor of at most 600, preferably at most 300, particularly preferably at most 100, wherein the average thickness is an average of the thickness of the coating (10) in a region of the at least one flank surface (5) which butts against the segment region, said region butting against the segment region over the entire segment region of the coated cutting-edge segment (11),
as a result of which, following the application of the coating (10), part of the coating (10) of the cutting edge (62.1) chips away and thus forms a new cutting edge (62.1), wherein a site of rupture, at which the part of the coating (10) has chipped away, forms a new rake surface (64), as a result of which, at each point of the coated cutting-edge segment (11) within the segment region of the coated cutting-edge segment (11), the quotient made up of the radius (6) of the coated cutting-edge segment (11) at the respective point divided by the local thickness of the coating is smaller than 0.9, wherein the segment region of the coated cutting-edge segment extends over at least 80% of the coated cutting-edge segment.

2. Method according to Claim 1, **characterized in that,** in order to determine the quotient at the respective point of the coated cutting-edge segment (11), use is made of the radius of the coated cutting-edge segment (11) at the respective point, wherein
the radius (6) of the coated cutting-edge segment (11) at the respective point is a radius (53) of a circle (51) which lies in a plane which butts against the respective point, wherein the plane is oriented perpendicularly to a tangent which butts against the respective point on the coated cutting-edge segment (11), and thus against the respective point on the cutting edge (3.1, 3.2, 3.3, 3.4, 62.1), and is oriented along the cutting edge (3.1, 3.2, 3.3, 3.4, 62.1), wherein
a distance between a line (50), which runs in the plane and comprises a segment of the circle (51), a first end region (52.1) and a second end region (52.2), and a surface of the cutting tool (1) is minimal, wherein
the line (50) is continuously differentiable and at a first end of the circle segment, as a first end region (52.1), has a first length segment of a first tangent, which butts against the circle (51) and is oriented parallel to the flank surface (5) there, and at a second end of the circle segment, as a second end region (52.2), comprises a second length segment of a second tangent, which butts against the circle (51) and is oriented parallel to the rake surface (4) there, wherein the first and the second length segments or end regions (52.1, 52.2) are each 5 µm, in particular 10 µm, long.

3. Method according to either of Claims 1 and 2, **characterized in that** the quotient made up of the radius (6) of the cutting edge (3.1, 3.2, 3.3, 3.4, 62.1) divided by the local thickness of the coating (10) is smaller than 0.6 or smaller than 0.3.

4. Method according to one of Claims 1 to 3, **characterized in that** the coating (10) comprises a single layer.

5. Method according to one of Claims 1 to 3, **characterized in that** the coating (10) comprises two or more layers (10.1, 10.2).

6. Method according to one of Claims 1 to 5, **characterized in that,** throughout the segment region of the coated cutting-edge segment (11), the coating (10) is applied directly to the substrate (7).

7. Method according to one of Claims 1 to 6, **characterized in that,** at each point of the coated cutting-edge segment (11) within the segment region of the coated cutting-edge segment (11), the local thickness of the coating (10) is greater than 5 µm, preferably greater than 7 µm, preferably greater than 10 µm, particularly preferably greater than 15 µm and quite particularly preferably greater than 20 µm.

8. Method according to one of Claims 1 to 7, **characterized in that** each point in the segment region of the coated cutting-edge segment (11) is formed by a region of the coating (10) in which the substrate (7), which is located beneath the coating (10), forms a substrate edge (8), wherein a substrate rake surface (9.2) butts against a first side of the substrate edge (8) and a substrate flank surface (9.1) butts against a side of the substrate edge (8) which runs opposite the first side of the substrate edge (8).

9. Method according to Claim 8, **characterized in that** each point in the segment region of the coated cutting-edge segment (11) is located above the substrate flank surface (9.1).

10. Method according to Claim 8 or 9, **characterized in that** an average thickness of the coating (10) on the substrate rake surface (9.2) is smaller than an average thickness of the coating (10) on the substrate flank surface (9.1).

11. Method according to Claim 10, **characterized in that** the cutting part (2) has a diameter (20) of 3 mm or less, 2 mm or less, or 1 mm or less.

12. Method according to one of Claims 1 to 11, **characterized in that** the coating (10) has a fraction of carbon by weight of less than 50%, preferably less than 30%, particularly preferably less than 15% and quite particularly preferably less than 5%.

13. Method according to one of Claims 1 to 12, **characterized in that** the coating (10) contains a proportion of in each case at least 10% of at least one, preferably at least two, particularly preferably at least three, of the elements Ti, Al, Cr and N.

## Revendications

1. Procédé de fabrication d'un outil de coupe (1) par enlèvement de copeaux, qui est une fraise massive et qui comprend un substrat (7) en métal dur ou en Cermet revêtu au moins en partie d'un revêtement (10), l'outil de coupe (1) présentant au moins une surface d'enlèvement de copeaux (64) et au moins une surface de dépouille (5), entre lesquelles est disposée au moins une arête de coupe (62.1), au moins une portion de l'au moins une arête de coupe (62.1) étant formée par le revêtement (10) et formant ainsi une portion d'arête de coupe revêtue (11), dans lequel au moins à l'intérieur d'une région partielle de la portion d'arête de coupe revêtue (11), en chaque point de la portion d'arête de coupe revêtue (11), un quotient d'un rayon (6) de la portion d'arête de coupe revêtue (11) au point respectif sur une épaisseur locale du revêtement (10) est inférieur à 0,9,
**caractérisé en ce que** le substrat (7) est revêtu avec le revêtement (10), et, pour qu'au moins à l'intérieur de la région partielle de la portion d'arête de coupe revêtue (11), en chaque point de la portion d'arête de coupe revêtue (11), le quotient du rayon (6) de la portion d'arête de coupe revêtue (11) au point respectif sur l'épaisseur locale du revêtement (10) soit inférieur à 0,9, l'outil de coupe (1) présente une partie de coupe (2) avec un diamètre (20) et le revêtement (10) est appliqué avec une épaisseur moyenne, **en ce que** le diamètre (20) de la partie de coupe (2) est supérieur d'un facteur de 600 au maximum, de préférence de 300 au maximum, particulièrement préférablement de 100 au maximum, à l'épaisseur moyenne du revêtement (10), l'épaisseur moyenne étant une valeur moyenne de l'épaisseur du revêtement (10) dans une région, s'appliquant contre la région de coupe sur toute la région de coupe de la portion d'arête de coupe revêtue (11), de l'au moins une surface de dépouille (5) s'appliquant contre la région de coupe,
de sorte qu'après l'application du revêtement (10), une partie du revêtement (10) de l'arête de coupe (62.1) soit ébréchée et forme ainsi une nouvelle arête de coupe (62.1), un point de rupture au niveau duquel la partie du revêtement (10) est ébréchée, formant une nouvelle surface d'enlèvement de copeaux (64), de sorte qu'à l'intérieur de la région partielle de la portion d'arête de coupe revêtue (11), en chaque point de la portion d'arête de coupe revêtue (11), le quotient du rayon (6) de la portion d'arête de coupe revêtue (11) au point respectif sur l'épaisseur locale du revêtement soit inférieur à 0,9, la région partielle de la portion d'arête de coupe revêtue s'étendant sur au moins 80 % de la portion d'arête de coupe revêtue.

2. Procédé selon la revendication 1, **caractérisé en ce que** pour la détermination du quotient au point respectif de la portion d'arête de coupe revêtue (11), on utilise le rayon de la portion d'arête de coupe revêtue (11) au point respectif,
le rayon (6) de la portion d'arête de coupe revêtue (11), au point respectif, étant un rayon (53) d'un cercle (51) qui est situé dans un plan s'appliquant au niveau du point respectif, le plan étant orienté perpendiculairement à une tangente au point respectif au niveau de la portion d'arête de coupe revêtue (11) et par conséquent au point respectif au niveau de l'arête de coupe (3.1, 3.2, 3.3, 3.4, 62.1) et orientée le long de l'arête de coupe (3.1, 3.2, 3.3, 3.4, 62.1),
une distance d'une ligne (50) s'étendant dans le plan, qui se compose d'une portion de cercle du cercle (51), d'une première région d'extrémité (52.1) et d'une deuxième région d'extrémité (52.2), à une surface de l'outil de coupe (1) étant minimale,
la ligne (50) étant continuellement différenciable et présentant, à une première extrémité de la portion de cercle, en tant que première région d'extrémité (52.1), une première portion de longueur d'une première tangente au cercle (51) qui est orientée parallèlement à la surface de dépouille (5) à cet endroit, et comprenant, à une deuxième extrémité de la portion de cercle, en tant que deuxième région d'extrémité (52.2), une deuxième portion de longueur d'une deuxième tangente au cercle (51), qui est orientée parallèlement à la surface d'enlèvement de copeaux (4) à cet endroit, la première et la deuxième portion de longueur ou région d'extrémité (52.1, 52.2) mesurant chacune 5 µm, en particulier 10 µm de long.

3. Procédé selon l'une quelconque des revendications 1 et 2, **caractérisé en ce que** le quotient du rayon (6) de l'arête de coupe (3.1, 3.2, 3.3, 3.4, 62.1) sur l'épaisseur locale du revêtement (10) est inférieur à 0,6 ou est inférieur à 0,3.

4. Procédé selon l'une quelconque des revendications 1 à 3, **caractérisé en ce que** le revêtement (10) comprend une couche unique.

5. Procédé selon l'une quelconque des revendications 1 à 3, **caractérisé en ce que** le revêtement (10) comprend deux ou plus de deux couches (10.1, 10.2).

6. Procédé selon l'une quelconque des revendications 1 à 5, **caractérisé en ce que** dans la région partielle totale de la portion d'arête de coupe revêtue (11), le revêtement (10) est directement appliqué sur le substrat (7).

7. Procédé selon l'une quelconque des revendications 1 à 6, **caractérisé en ce qu'**à l'intérieur de la plage partielle de la portion d'arête de coupe revêtue (11) en chaque point de la portion d'arête de coupe revêtue (11), l'épaisseur locale du revêtement (10) est supérieure à 5 µm, de préférence supérieure à 7 µm, de préférence supérieure à 10 µm, particulièrement préférablement supérieure à 15 µm et tout particulièrement préférablement supérieure à 20 µm.

8. Procédé selon l'une quelconque des revendications 1 à 7, **caractérisé en ce que** chaque point dans la région partielle de la portion d'arête de coupe revêtue (11) est formé par une région du revêtement (10) dans laquelle le substrat (7) situé sous le revêtement (10) forme une arête de substrat (8), une surface d'enlèvement de copeaux de substrat (9.2) s'appliquant sur un premier côté de l'arête de substrat (8) et une surface de dépouille de substrat (9.1) s'appliquant sur un côté de l'arête de substrat (8) opposé au premier côté de l'arête de substrat (8).

9. Procédé selon la revendication 8, **caractérisé en ce que** chaque point dans la région partielle de la portion d'arête de coupe revêtue (11) s'étend sur la surface de dépouille de substrat (9.1).

10. Procédé selon la revendication 8 ou 9, **caractérisé en ce qu'**une épaisseur moyenne du revêtement (10) sur la surface d'enlèvement de copeaux de substrat (9.2) est inférieure à une épaisseur moyenne du revêtement (10) sur la surface de dépouille de substrat (9.1).

11. Procédé selon la revendication 10, **caractérisé en ce que** la partie de coupe (2) présente un diamètre (20) de 3 mm ou moins, de 2 mm ou moins, ou de 1 mm ou moins.

12. Procédé selon l'une quelconque des revendications 1 à 11, **caractérisé en ce que** le revêtement (10) présente une proportion en poids de carbone inférieure à 50 %, de préférence inférieure à 30 %, particulièrement préférablement inférieure à 15 % et tout particulièrement préférablement inférieure à 5 %.

13. Procédé selon l'une quelconque des revendications 1 à 12, **caractérisé en ce que** le revêtement (10) contient une proportion quantitative respective d'au moins 10 % d'au moins un, de préférence d'au moins deux, particulièrement préférablement d'au moins trois, des éléments Ti, Al, Cr et N.
